# EUROPEAN PATENT APPLICATION

(11) **EP 4 822 624 A1**
(43) Date of publication of application: **14.10.2026**
(21) Application number: 26168642.2
(22) Date of filing: 27.03.2026
(51) Int. Cl.: G06Q 10/087

(54) **PROCESS CONTROL FOR WAREHOUSE OPERATIONS**

(30) Priority: 07.04.2025 US 202519171545
(71) Applicant: SAP SE, 69190 Walldorf (DE)
(72) Inventor: Dohm, Marc, 69190 Walldorf (DE); Hoehmann, Inga, 69190 Walldorf (DE); Thiele, Christopher, 69190 Walldorf (DE); Biehler, Daniel, 69190 Walldorf (DE); Serbes, Ahmet, 69190 Walldorf (DE)
(74) Representative: DeltaPatents B.V.

(57) **Abstract**

The present disclosure involves systems, software, and computer implemented methods for process control for warehouse operations. One example method includes identifying, for a warehouse, a warehouse request that includes a set of warehouse request items. A data model is used to identify, for each warehouse request item, a warehouse process data object instance associated with a warehouse process for handling the warehouse request and a warehouse process control configuration data object instance for the warehouse process data object instance that defines both a sequence of operational steps of the warehouse process and physical movement of goods through the warehouse. Progress of each warehouse request item is tracked using warehouse task objects and an intermediary warehouse progress object. New warehouse task objects are created based on the warehouse process control configuration object. A determination is made that a final warehouse task has been completed for the warehouse request item.

## Description

### TECHNICAL FIELD

The present disclosure relates to computer-implemented methods, software, and systems for process control for warehouse operations.

### BACKGROUND

A warehouse may receive different types of requests that trigger warehouse processes. For example, a warehouse can receive a request corresponding to a customer order, an internal transfer, a return to a vendor, or a production supply. In response to a warehouse request, a warehouse can perform various processes. For example, warehouse processes can include picking preparation, picking, packing, staging, loading, and goods issue.

### SUMMARY

The present disclosure involves systems, software, and computer implemented methods for process control for warehouse operations. An example method includes: identifying, for a warehouse, a warehouse request that includes a set of warehouse request items; for each warehouse request item, identifying, using a data model, a warehouse process data object instance associated with a warehouse process for handling the warehouse request and a warehouse process control configuration data object instance for the warehouse process data object instance that defines both a sequence of operational steps of the warehouse process and physical movement of goods through the warehouse; tracking, using the data model, progress of each warehouse request item using warehouse task data object instances and an intermediary warehouse progress data object instance for the warehouse request item including creating new warehouse task object instances based on the warehouse process control configuration data object instance; determining, for each warehouse request item, that a final warehouse task has been completed for the warehouse request item; and recording completion of the warehouse request.

Implementations may include one or more of the following features. A target location of a previous warehouse task data objects can define a source location of a next warehouse task in the sequence. The warehouse request can be triggered by an order, an internal transfer, a return to a vendor, or a production supply. The warehouse request can be an outbound warehouse request, an inbound warehouse request, or an internal warehouse request. The method can include using intermediate warehouse progress data object instances to track different request item quantities through different warehouse process steps. The method can include: identifying a handling unit for multiple quantities of a warehouse request item; creating a first intermediary warehouse progress data object instance for tracking the handling unit; and tracking progress of the multiple quantities of the warehouse request item and the handling unit using the first intermediary warehouse progress data object instance. Using intermediary warehouse progress data object instances can include tracking different quantities of a warehouse request item at different process steps and at different warehouse locations. The warehouse process control configuration data object instance can specify which completion of which warehouse process steps meet different process milestones. Intermediary warehouse progress data object instances can track, for a warehouse request item, which milestones have been completed for the warehouse request item. Intermediary warehouse progress data object instances can indicate a next process step for a warehouse request item. Tracking, using the data model, progress of each warehouse request item using warehouse task object instances and an intermediate warehouse progress data object instance for the warehouse request item can include: receiving an indication of a first task completion; updating the intermediary warehouse progress data object instance; reading the warehouse process control configuration data object instance to identify a next task; and creating a warehouse task object instance for the next task. The method can include: identifying an exception condition for a warehouse request item that has a first intermediary warehouse progress data object instance; creating a new intermediary warehouse progress data object instance for handling the exception condition; handling the exception condition using the new intermediary warehouse progress data object instance; and resuming the warehouse process using the first intermediary warehouse progress data object instance.

While generally described as computer-implemented software embodied on tangible media that processes and transforms the respective data, some or all of the aspects may be computer-implemented methods or further included in respective systems or other devices for performing this described functionality. The details of these and other aspects and embodiments of the present disclosure are set forth in the accompanying drawings and the description below. Other features, objects, and advantages of the disclosure will be apparent from the description and drawings, and from the claims.

### DESCRIPTION OF DRAWINGS

FIG. 1 is a block diagram illustrating an example system for process control for warehouse operations.
FIG. 2 illustrates an example data model.
FIGS. 3A-3B illustrate an example method for process control for warehouse operations.
FIG. 4 illustrates an example table corresponding to an example outbound process entity instance.
FIG. 5 illustrates an example table corresponding to outbound process control definitions.
FIG. 6A illustrates an example table for warehouse requests.
FIG. 6B illustrates an example table for warehouse request items.
FIG. 7A illustrates an example outbound progress table.
FIGs. 7B-7D illustrate example updated outbound progress tables.
FIG. 8 illustrates an outbound process table for a second example.
FIG. 9 illustrates an example outbound process control table.
FIG. 10 illustrates an example warehouse request item table.
FIG. 11 illustrates an example outbound progress table.
FIG. 12 illustrates an example outbound warehouse task table.
FIGs. 13, 15, 17, 19, 21, 23, 25, 26, 28, 30, and 32 illustrate updated output progress tables.
FIGs. 14, 16, 18, 20, 22, 24, 27, 29, and 31 illustrate updated outbound warehouse task tables.
FIG. 33 is a flowchart of an example method for process control for warehouse operations.

### DETAILED DESCRIPTION

Outbound processes for warehouses are important for order fulfillment and other activities and therefore play an important role in organizational relationships. Outbound warehouse processes can include steps to bring requested goods from a warehouse to a customer, a goods issue zone, or a transfer point to a carrier. Outbound processes may generally include steps of picking preparation, actual picking execution, packing, staging, loading, and at the end a goods issue posting when the products finally left the warehouse. These process steps can be referred to as milestones that are to be completed for a warehouse process to be considered as completed.

A warehouse request data object can represent a request that initiates and coordinates goods movements from a warehouse. A warehouse request can be created in response to different types of triggers, such as orders, company-internal transfers to other locations, returns to a vendor, production supply, and other examples. A warehouse request data object can include a header with general information and one or more line items with product specific information that also includes a requested quantity per product.

An outbound process can be performed in response to a warehouse request, for each item in the warehouse request. In some examples, multiple warehouse request items are processed together (e.g. moving packed goods from a packing area to the staging area). In a warehouse process, a next milestone in the process can involve multiple smaller sub-steps which can differ from warehouse to warehouse, from product to product, or are even depending on packaging, available quantities, or available equipment such as forklifts.

As an example, to perform a complete picking for one warehouse request item, it might be required to manually select the requested products from a source location and place the selected products onto a pick cart (e.g., as a first sub-step). After the first sub-step, the products may need to be moved with the pick cart to a packing area and placed on a packing table (e.g., as a second sub-step). In this example, the picking milestone may be considered to be completed only after the second sub-step is completed. As another example, another product that is stored in a pallet cage may need to be directly moved from a source location to a packing area with a forklift, thus for this example only a single sub step is needed to perform picking.

These smaller sub-steps of warehouse processes can be referred to as warehouse tasks. An outbound warehouse process can be configured as a sequence of warehouse tasks where a target location of a previous task in the sequence defines a source location of a next task in the sequence. The warehouse tasks can be processed sequentially (e.g., by warehouse workers, robots, other automated equipment or processes) until a final milestone of the warehouse request item is completed.

As mentioned, sometimes several warehouse tasks or sub-steps need to be processed to reach a next milestone. In other examples, a task completion can concurrently cause completion of multiple milestones (e.g., such as when a complete pallet is picked and brought directly to a staging area with a single task). In yet other examples, it may be necessary to process a complete sequence of tasks or sub-steps multiple times for a single warehouse request item (e.g., if a requested quantity is too big to be handled by single workers or single forklifts or if in the warehouse process a part of the goods is damaged and needs to be re-picked). Thus in warehouse process execution, there may be several process flows with sub-quantities of a complete warehouse request item in parallel that are assigned to different operators.

To handle flexible and custom warehouse processes, an improved warehouse process solution can be used to define and configure custom-fit warehouse processes that fulfill various requirements by flexibly handling monitoring and configuration capabilities that support various variants of warehouse task sequences. Although outbound processes are described herein, systems and methods of the solution can be used for inbound warehouse processes and internal movement of goods.

The improved warehouse process solution can handle flexible sequences of operational steps and physical movements of items through a warehouse (e.g., picking, packing, loading, staging). The improved warehouse solution can provide, at any time during the process, a state of the overall process and the locations of the currently moved or processed products. The improved warehouse process solution can enable determination of next process steps and reacting to process deviations at any point in time. Furthermore, the improved warehouse process solution can flexibly support different warehouse layouts, customer-specific extensions, and convenient setup and process reconfiguration. The improved warehouse process solution can handle other aspects, such as handling splitting and bundling movements for working efficiently with pallets or other handling units.

The improved warehouse process solution can include an orchestrator that operates based on a flexible warehouse process data model. The data model can include various entities for flexible and efficient warehouse process handling. The entities can include, for example, outbound warehouse request entities, outbound warehouse request item entities, and outbound warehouse task entities (e.g., representing warehouse tasks and sub steps). The data model also includes an intermediate outbound progress entity that the orchestrator can use to create and monitor tasks of several process flows with sub-quantities of a complete outbound warehouse request item. The intermediate outbound progress entity connects both outbound warehouse request item entities and associated outbound warehouse task entities.

The data model can also include outbound process and outbound process control configuration entities that model warehouse processes with their steps and sub-steps. An instance of an outbound process entity represents a single outbound process in a warehouse. A given warehouse can have multiple outbound processes defined.

For each warehouse request item in a warehouse request, an appropriate outbound process can be selected before processing of the item is started. The selection of a warehouse process for an item can either be done manually or automatically based on a set of rules. Rules, for example, can define that a particular process can be selected for an item based on the requested product itself or based on an area where the requested product is stored in the warehouse.

Once a given outbound process is selected for an item, the orchestrator can orchestrate the process by referring to the associate outbound process control entity that defines the sequence of steps to reach corresponding milestones for a warehouse request item. The outbound process control entity combines a definition of both the operational steps of a process and the physical movements of items through the warehouse.

The manner in which an outbound process is physically executed in a warehouse can differ depending on differences in criteria such as source location, destination location, product, or customer requirements. For instance, while in some cases a packing step may be skipped when picking a full pallet and goods are brought directly to a staging area, unpacked stock is often first packed at a packing station to prepare the stock for transport. To support flexible differences in processes, the outbound process control entity can be used to define processes that specify the steps in which a product moves through a warehouse to its destination. The orchestrator can track tasks for each item and task progress using the outbound warehouse task and outbound progress entities.

As mentioned, the improved warehouse process solution can enable flexible configuration and tracking of various different warehouse process flows. Further advantages include: 1) enabling servicing of warehouse requests from different sources; 2) flexible control over process milestone completion; 3) exception handling; and 4) tracking progress on a handling-unit level. Regarding servicing warehouse requests from different sources, processes in a warehouse can differ greatly based on a source location from which a product is picked. For instance, it may be possible to pick partial quantities of a warehouse request item from different source locations using different outbound processes. For example, a warehouse request item for 150 pieces might be split using the improved warehouse process solution into two different processes: 1) a full-pallet pick for 100 pieces that goes directly from a high rack to a staging area; and 2) picking the remaining 50 pieces from another source location and packing them before those pieces are brought to the staging area. With the improved warehouse process solution, the outbound progress entity can enable tracking exactly where the corresponding quantities are in their respective processes and following of different paths through the warehouse to reach an expected destination. The solution also enables consolidation of quantities during process execution. For instance, if different quantities of unpacked stock with a same reference arrive at a same location, the orchestrator can merged multiple outbound progress entities into one outbound progress entry.

Regarding flexible control over milestone completion, the configuration information in an outbound process control instance can provide explicit configuration possibilities for defining when a milestone is set using a same mechanism for all milestones. For example, for two-step picking scenarios, the outbound process control enables configuration of picking milestone completion of either when an operator confirms a first warehouse task for a resource or after a drop-off at a pack station. Using a same mechanism and persisting reached milestones in outbound progress entries can enable efficiently selection of outbound progress data by all statuses / milestones (e.g., all items for which packing has completed, all items loaded, etc.).

Regarding exception handling, if, for example, a subset of a required quantity of an item is damaged during a packing step, the process step can be confirmed with a partial quantity and a suitable exception code. Accordingly, in a corresponding outbound progress entry, the process step status can change and a quantity can be reduced. Additionally, a picking-preparation milestone on the warehouse request item can return to a status of in-progress since a requested quantity is no longer completely picked in the outbound progress table. A new picking warehouse task for the remaining quantity can be created for picking the remaining quantity. In other exception examples, there may be exceptional cases where stock needs to be temporarily moved to a location that is outside of defined locations in the process control configuration. In such examples, the stock can later be moved back to a valid location to resume the process (e.g., either by a manual ad-hoc move or by an automatically created follow-up task).

Regarding tracking progress on a handling unit level, there may be situations where multiple warehouse request items (possibly also from multiple warehouse requests) that are packed together into one temporary handling unit or into one final shipping handling unit. In such examples, an additional entry can be created by the orchestrator in the outbound progress table which references, for example, a shipping handling unit. This additional progress entry can be added as a reference to the entries for packed warehouse request items. All subsequent movements of the handling unit can result in updating of the additional progress entry while all other progress items for its contents remain stable. Such handling unit flexibility can provide an advantage in that the progress for potentially thousands of warehouse request items can be tracked by updating one single progress item.

When bundling items in a handling unit, a "first come, first served" principle can be applied. For instance, a first item that is packed into the handling unit can determine an outbound process for the handling unit and thus remaining subsequent steps. All further items for the handling unit can have the same outbound process maintained or a process that is compatible in the remaining steps.

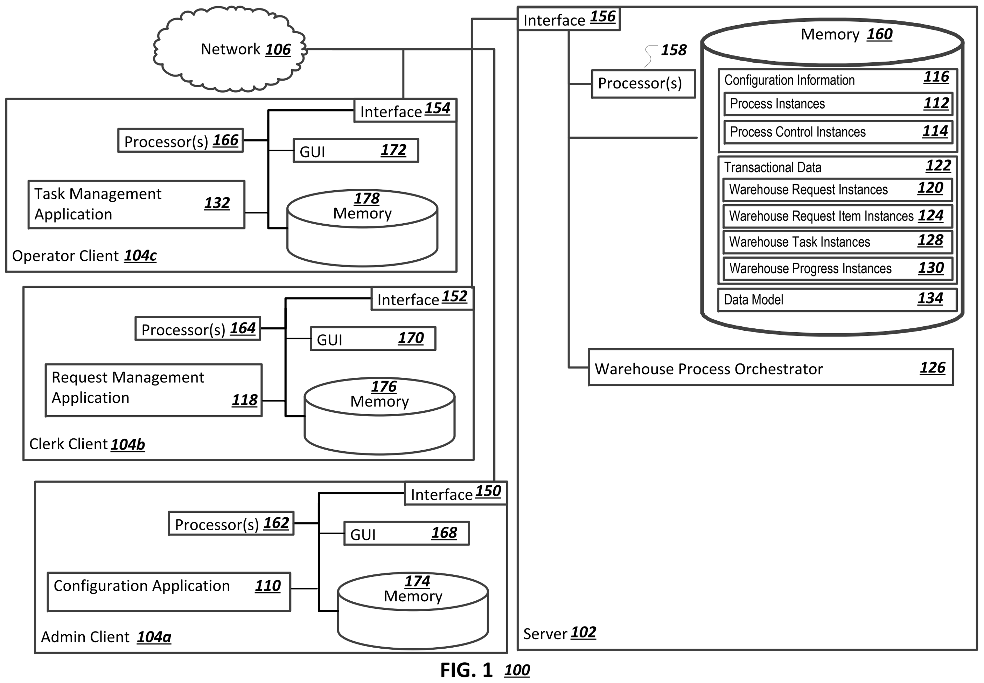

FIG. 1 is a block diagram illustrating an example system 100 for process control for warehouse operations. Specifically, the illustrated system 100 includes or is communicably coupled with a server 102, an admin client device 104a, a clerk client device 104b, an operator client device 104c, and a network 106. Although shown separately, in some implementations, functionality of two or more systems or servers may be provided by a single system or server. In some implementations, the functionality of one illustrated system, server, or component may be provided by multiple systems, servers, or components, respectively.

An administrator can use a configuration application 110 to configure a warehouse process. As described in more detail below, process configuration information can be stored in process data object instances 112 and process control data object instances 114 (which includes information on process steps) in a configuration information storage 116.

A warehouse clerk (or other user) can use a request management application 118 to create a warehouse request. Warehouse request data can be stored in warehouse request object instances 120 of transactional data storage 122. The warehouse clerk (or the request management application 118 itself) can associate a particular warehouse process for the warehouse request. The warehouse request can be associated with a set of warehouse request item instances 124 (e.g., where the item instances include information about particular items in the request).

A warehouse process orchestrator can orchestrate handling of the warehouse request items of the warehouse request using the warehouse process associated with the warehouse request. The warehouse process orchestrator can use a process control instance for the process to create, in turn, warehouse task instances 128 for the respective tasks and create intermediary warehouse progress instances 130 that track progress of particular request items. Task completion can be confirmed by warehouse operators using a task management application 132 running on respective operator client devices 104c.

The relationships between warehouse process data object instances, process control data object instances, warehouse request data object instances, warehouse request item data object instances, warehouse task data object instances, and warehouse progress data object instances can be reflected in a data model 134. Further details of creation, use, and updating of the various data objects, including by the warehouse process orchestrator 126, is included below.

As used in the present disclosure, the term "computer" is intended to encompass any suitable processing device. For example, although FIG. 1 illustrates a single server 102, and single client devices 104a, 104b, and 104c, the system 100 can be implemented using two or more servers 102, and/or two or more client devices 104a, 104b, or 104c. Indeed, the server 102 and the client devices 104a, 104b, and 104c may each be any computer or processing device such as, for example, a blade server, general-purpose personal computer (PC), Mac^{®}, workstation, UNIX-based workstation, or any other suitable device. In other words, the present disclosure contemplates computers other than general purpose computers, as well as computers without conventional operating systems. Further, the server 102 and the client devices 104a, 104b, and 104c may each be adapted to execute any operating system, including Linux, UNIX, Windows, Mac OS^{®}, Java^{™}, Android^{™}, iOS or any other suitable operating system. According to one implementation, the server 102 may also include or be communicably coupled with an e-mail server, a Web server, a caching server, a streaming data server, and/or other suitable server.

Interfaces 150, 152, 154, and 156 are used by the client devices 104a, 104b, and 104c, and the server 102, respectively, for communicating with other systems in a distributed environment - including within the system 100 - connected to the network 106. Generally, the interfaces 150, 152, 154, and 156 each comprise logic encoded in software and/or hardware in a suitable combination and operable to communicate with the network 106. More specifically, the interfaces 150, 152, 154, and 156 may each comprise software supporting one or more communication protocols associated with communications such that the network 106 or interface's hardware is operable to communicate physical signals within and outside of the illustrated system 100.

The server 102 includes one or more processors 158. Each processor 158 may be a central processing unit (CPU), a blade, an application specific integrated circuit (ASIC), a field-programmable gate array (FPGA), or another suitable component. Generally, each processor 158 executes instructions and manipulates data to perform the operations of the server 102. Specifically, each processor 158 executes the functionality required to receive and respond to requests from the client devices 104a, 104b, and 104c, for example.

Regardless of the particular implementation, "software" may include computer-readable instructions, firmware, wired and/or programmed hardware, or any combination thereof on a tangible medium (transitory or non-transitory, as appropriate) operable when executed to perform at least the processes and operations described herein. Indeed, each software component may be fully or partially written or described in any appropriate computer language including C, C++, Java^{™}, JavaScript^{®}, Visual Basic, assembler, Perl^{®}, any suitable version of 4GL, as well as others. While portions of the software illustrated in FIG. 1 are shown as individual modules that implement the various features and functionality through various objects, methods, or other processes, the software may instead include a number of sub-modules, third-party services, components, libraries, and such, as appropriate. Conversely, the features and functionality of various components can be combined into single components as appropriate.

The server 102 includes memory 160. In some implementations, the server 102 includes multiple memories. The memory 160 may include any type of memory or database module and may take the form of volatile and/or non-volatile memory including, without limitation, magnetic media, optical media, random access memory (RAM), read-only memory (ROM), removable media, or any other suitable local or remote memory component. The memory 160 may store various objects or data, including caches, classes, frameworks, applications, backup data, business objects, jobs, web pages, web page templates, database tables, database queries, repositories storing business and/or dynamic information, and any other appropriate information including any parameters, variables, algorithms, instructions, rules, constraints, or references thereto associated with the purposes of the server 102.

The client devices 104a, 104b, and 104c may each generally be any computing device operable to connect to or communicate with the server 102 via the network 106 using a wireline or wireless connection. In general, the client devices 104a, 104b, and 104c each comprise an electronic computer device operable to receive, transmit, process, and store any appropriate data associated with the system 100 of FIG. 1. The client devices 104a, 104b, and 104c can each include one or more client applications, including the configuration application 110, the request management application 118, or the task management application 132, respectively. A client application is any type of application that allows a respective client device to request and view content on the client device. In some implementations, a client application can use parameters, metadata, and other information received at launch to access a particular set of data from the server 102. In some instances, a client application may be an agent or client-side version of the one or more enterprise applications running on an enterprise server (not shown).

The client devices 104a, 104b, and 104c each further include one or more processors 162, 164, or 166, respectively. Each processor in the processors 162, 164, and 166 may be a central processing unit (CPU), an application specific integrated circuit (ASIC), a field-programmable gate array (FPGA), or another suitable component. Generally, each processor in the processors 162, 164, and 166 executes instructions and manipulates data to perform the operations of the respective client device. Specifically, each processor in the processors 162, 164, and 166 executes the functionality required to send requests to the server 102 and to receive and process responses from the server 102.

The client devices 104a, 104b, and 104c are each generally intended to encompass any client computing device such as a laptop/notebook computer, wireless data port, smart phone, personal data assistant (PDA), tablet computing device, one or more processors within these devices, or any other suitable processing device. For example, the client devices 104a, 104b, and 104c may each comprise a computer that includes an input device, such as a keypad, touch screen, or other device that can accept user information, and an output device that conveys information associated with the operation of the server 102, or the respective client device itself, including digital data, visual information, or a GUI (Graphical User Interface) 168, 170, or 172, respectively.

The GUIs 168, 170, and 172 can each interface with at least a portion of the system 100 for any suitable purpose, including generating a visual representation of the configuration application 110, the request management application 118, or the task management application 132, respectively. In particular, the GUIs 168, 170, and 172 may each be used to view and navigate various Web pages, or other user interfaces. Generally, the GUIs 168, 170, and 172 each provide a respective user with an efficient and user-friendly presentation of business data provided by or communicated within the system. The GUIs 168, 170, and 172 may each comprise a plurality of customizable frames or views having interactive fields, pull-down lists, and buttons operated by the user. The GUIs 168, 170, and 172 may each contemplate any suitable graphical user interface, such as a combination of a generic web browser, intelligent engine, and command line interface (CLI) that processes information and efficiently presents the results to the user visually.

Memory 174, 176, and 178 respectively included in the client devices 104a, 104b, and 104c may each include any memory or database module and may take the form of volatile or non-volatile memory including, without limitation, magnetic media, optical media, random access memory (RAM), read-only memory (ROM), removable media, or any other suitable local or remote memory component. The memories 174, 176, and 178 may each store various objects or data, including user selections, caches, classes, frameworks, applications, backup data, business objects, jobs, web pages, web page templates, database tables, repositories storing business and/or dynamic information, and any other appropriate information including any parameters, variables, algorithms, instructions, rules, constraints, or references thereto associated with the purposes of the respective client device.

There may be any number of client devices 104a, 104b, and 104c associated with or external to the system 100. For example, while the illustrated system 100 includes one client device 104a, one client device 104b, and one client device 104c, alternative implementations of the system 100 may include multiples of different client devices communicably coupled to the server 102 and/or the network 106, or any other number suitable to the purposes of the system 100. Additionally, there may also be one or more additional client devices external to the illustrated portion of system 100 that are capable of interacting with the system 100 via the network 106. Further, the term "client", "client device" and "user" may be used interchangeably as appropriate without departing from the scope of this disclosure. Moreover, while the client devices 104a, 104b, and 104c may be described in terms of being used by a single user, this disclosure contemplates that many users may use one computer, or that one user may use multiple computers.

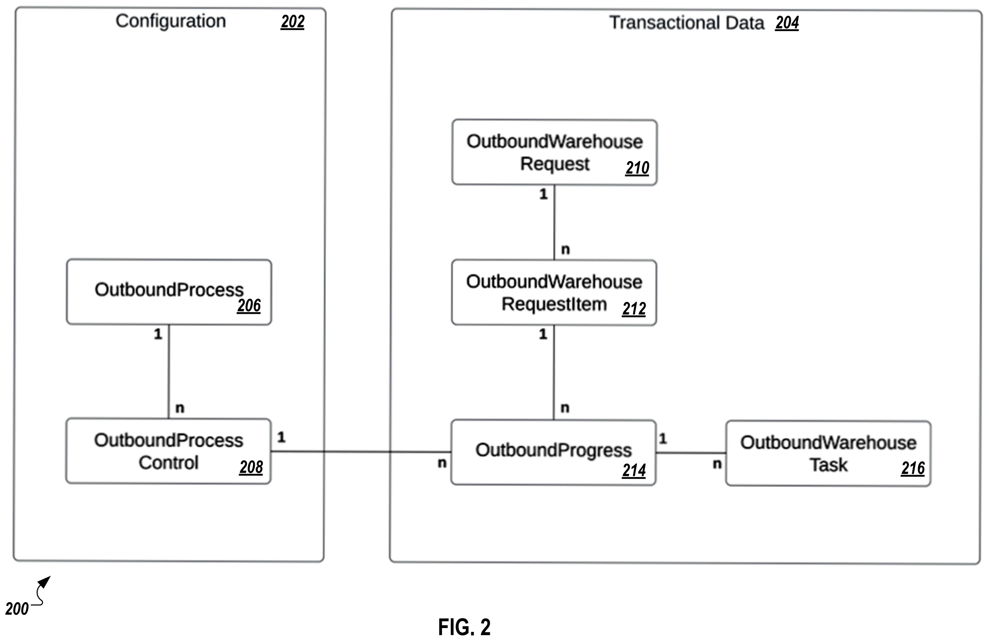

FIG. 2 illustrates an example data model 200. The data model 200 includes a configuration portion 202 and a transactional data portion 204. In the configuration portion 202, a given instance of an OutboundProcess entity 206 can be associated with one or more instances of an OutboundProcessControl entity 208. A definition of the OutboundProcess entity is shown in Table 1 and a definition of the OutboundProcessControl entity is shown in Table 2. The OutboundProcess entity 206 is a header entity that represents an outbound process. The OutboundProcessControl entity 208 is an entity that represents steps of the outbound process (e.g., the OutboundProcessControl instance can define a sequence of warehouse tasks to reach respective milestones for a warehouse request item). For each step, source, destination and/or intermediate location(s) for the step can be defined. Additionally, milestone completion met for particular process step completion can be tracked.

In the transactional data portion 204, a given instance of an OutboundWarehouseRequest entity 210 can be associated with one or more instances of an OutboundWarehouseRequestItem entity 212. A definition of the OutboundWarehouseRequest entity is shown in Table 3 and a definition of the OutboundWarehouseRequest entity is shown in Table 4. A warehouse request represents a request that initiates and coordinates goods movement from a warehouse. A warehouse request can correspond to a customer order, an internal transfer, a return to a vendor, production supply, etc. The instance of the OutboundWarehouseRequest entity 210 can be a header that includes general information for the request. The related instances of the OutboundWarehouseRequestItem entity 212 can represent line items for the request with product specific information and requested quantities.

A given instance of the OutboundWarehouseRequestItem entity 212 can be associated with one or more instances of an OutboundProgress entity 214. A definition of the OutboundProgress entity is shown in Table 5. The instance of the OutboundProgress entity 214 can track progress for the request itself and for particular items or even sub quantities of items, as described in more detail below.

A given instance of the OutboundProgress entity 214 can be associated with one or more instances of an OutboundWarehouseTask entity 216. A definition of the OutboundWarehouseTask entity is shown in Table 6. The OutboundWarehouseTask entity 216 can represent tasks that are performed by warehouse operators, for example.

**Table 1 OutboundProcess Entity Definition**

| **OutboundProcess - Table Definition** | |
|---|---|
| **Attribute** | **Attribute Description** |
| ID | Primary key, ID of the outbound process. |
| warehouse | Reference to the warehouse where this process is in usage. |
| description | Description of the warehouse process. |

**Table 2 OutboundProcessControl Entity Definition**

| **OutboundProcessControl - Table Definition** | |
|---|---|
| **Attribute** | **Attribute Description** |
| ID | Primary key, ID of the outbound process control. |
| outboundProcess | Reference to the outbound process. |
| description | Description for the process step. |
| sequenceNumber | Position of the process step in the corresponding outbound process. |
| source | Reference to the source location of this step. An empty value indicates that the source is not pre-defined to increase flexibility. |
| destination | Reference to the destination location for this outbound process step. An empty value indicates that the destination of this step can be chosen on warehouse task creation based on availability of free space. |
| intermediate | Reference to intermediate location for this outbound process step. Needed for example for fixed handover locations e.g. between an automated part of the warehouse and an adjacent area. |
| setPickingToCompleted | Indicator to set the milestone for picking to completed in the outbound progress table once this step is finished. |
| setPackingToCompleted | Indicator to set the milestone for packing to completed in the outbound progress table once this step is finished. |
| setStagingToCompleted | Indicator to set the milestone for staging to completed in the outbound progress table once this step is finished. |
| setLoadingToCompleted | Indicator to set the milestone for loading to completed in the outbound progress table once this step is finished. |

**Table 3 OutboundWarehouseRequest Entity Definition**

| **OutboundWarehouseRequest - Table Definition** | |
|---|---|
| **Attribute** | **Attribute Description** |
| ID | Primary key, ID of the warehouse request. |
| warehouse | Reference to the warehouse that shall fulfill this request. |
| predecessorDocumentCategory | Category of the corresponding predecessor document (e.g., sales order, stock transfer order, ...). |
| predecessorDocument | Reference to a corresponding predecessor document. |
| carrier | Reference to the business partner that transports the goods from the warehouse to the destination. |

**Table 4 OutboundWarehouseRequestItem Entity Definition**

| **OutboundWarehouseRequestItem - Table Definition** | |
|---|---|
| **Attribute** | **Attribute Description** |
| ID | Primary key, warehouse request item ID. |
| warehouseRequest | Reference to the corresponding parent warehouse request in table OutboundWarehouseRequest. |
| product | Reference to the requested product. |
| batch | Reference to the requested batch. |
| requestedQuantity | Requested quantity. |
| unitOfMeasure | Unit of measure of the requested quantity. |
| stockOwner | Owner of stock in the warehouse. |
| stagingArea | Reference to the location in the warehouse where all products of a warehouse request are collected before the pickup through the carrier happens. |
| outboundProcess | Reference to an outbound process. |
| pickPlanningStatus | Status of the pick planning milestone. |
| pickPlanningDateTime | Date and time when picking was planned completely. |
| pickingStatus | Status of the picking milestone. |
| pickingDateTime | Date and time when picking was completed. |
| stagingStatus | Status if the staging milestone. |
| stagingDateTime | Date and time when staging was completed. |
| loadingStatus | Status of the loading milestone. |
| loadingDateTime | Date and time when loading was completed. |
| goodsIssueStatus | Status to track if all goods have left the warehouse. |
| goodsIssueDateTime | Date and time of the goods issue posting. |
| plannedGoodsIssueDateTime | Planned date and time when the delivery shall leave the warehouse. |

**Table 5 OutboundProgress Entity Definition**

| **OutboundProgress - Table Definition** | |
|---|---|
| **Attribute** | **Attribute Description** |
| ID | Primary key, ID of the outbound progress. |
| warehouseRequestItem | Reference to the outbound warehouse request item. Can be populated if handlingUnit is empty. |
| handlingUnit | Reference to handling unit through which the further process for the warehouse request items referencing this handling unit (see field referenceHandlingUnit) is tracked. |
| outboundProcess | Reference to the outbound process. |
| nextProcessStep | Next process step of the outbound process, reference to outbound process control. |
| referenceHandlingUnit | Reference to the handling unit (see field: handlingUnit) through which the further process of the warehouse request item is tracked. |
| quantity | Quantity processed by this entry, might be smaller than the requested quantity in the outbound warehouse request item. |
| pickingPlanned | Indicator whether picking is planned for this outbound progress entry. |
| pickingCompleted | Indicator whether picking is completed for this outbound progress entry. |
| packingCompleted | Indicator whether packing is completed for this outbound progress entry. |
| stagingCompleted | Indicator whether staging is completed for this outbound progress entry. |
| loadingCompleted | Indicator whether loading is completed for this outbound progress entry. |

**Table 6 OutboundWarehouseTask Entity Definition**

| **OutboundWarehouseTask - Table Definition** | |
|---|---|
| **Attribute** | **Attribute Description** |
| **ID** | Mandatory primary key, ID of the warehouse task. |
| warehouse | Mandatory, reference to the warehouse where this task is processed. |
| status | Warehouse task status (OPEN, CONFIRMED, CANCELED). |
| product | Reference to a product which is handled by this warehouse task, mandatory for product WT. |
| quantity | Planned warehouse task quantity, mandatory for product WT. |
| handlingUnitToMove | Handling unit which is moved with this warehouse task, mandatory for handling unit WT. |
| source | Source location from which the products or the moved handling unit shall be taken. |
| sourceHandlingUnit | Source handling unit from which the products or the moved handling unit shall be taken. |
| destination | Destination location to which the products or the moved handling unit shall be brought. |
| destinationHandlingUnit | Destination handling unit to which the products or the moved handling unit shall be brought. |
| followOnDestination | Reference to a location where the goods shall be brought to in case of re-routing or intermediate locations defined in the outbound process. |
| outboundWarehouseRequestItem | Reference to the business document which triggered the outbound process and thus the warehouse task creation. |
| outboundProgress | Reference to OutboundProgress entry. |

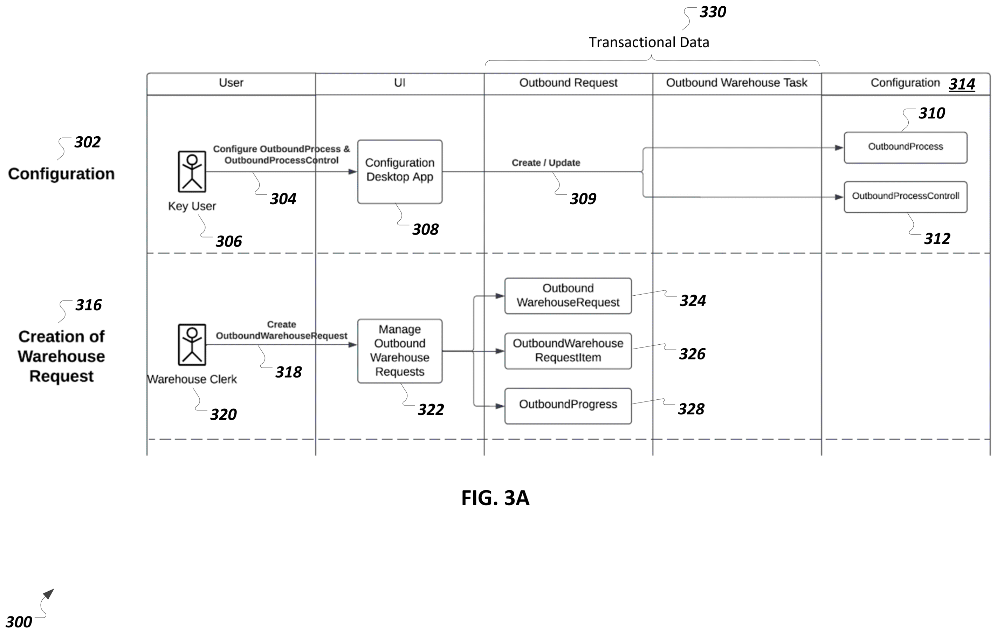

FIGS. 3A-3B illustrate an example method 300 for process control for warehouse operations. The method 300 can include a configuration phase 302. At 304, in the configuration phase 302, a key user 306 (e.g., an administrator) of a warehouse interacts with a configuration application 308 to configure an outbound process for the warehouse and an outbound process control for the outbound process. A result of the key user 306 interacting with the configuration application 308 can be creation / update commands 309 (e.g., sent to an orchestrator) that result in creation (and possible updates) of an instance 310 of an OutboundProcess entity and an instance 312 of an OutboundProcessControl entity in a configuration portion 314 of a data definition of the outbound process. The data definition can be in accordance with a data model, such as the data model 200 described above with respect to FIG. 2.

The method 300 can include a warehouse request creation phase 316. At 318, in the warehouse request creation phase 316, a user 320 (e.g., a warehouse clerk) interacts with a warehouse request management application 322 to create an outbound warehouse request. A result of the user 320 interacting with the warehouse request management application 322 can be creation (and possible updates) of an instance 324 of an OutboundRequest entity, instance(s) 326 of an OutboundRequestItem entity, and instance(s) 328 of an OutboundProgress entity. The instance 324 of the OutboundRequest entity, the instance(s) 326 of the OutboundRequestItem entity, and the instance(s) 328 of the OutboundProgress entity can be included in a transactional data portion 330 of the data definition of the outbound process and the respective entities can be in accordance with the data model. The OutboundRequestItem instance 324 can represent the outbound warehouse request, the OutboundWarehouseRequestItem instance(s) 326 can represent items included in the request, and the OutboundProgress instance(s) 328 can be created and initialized for tracking progress of completion of the outbound warehouse request.

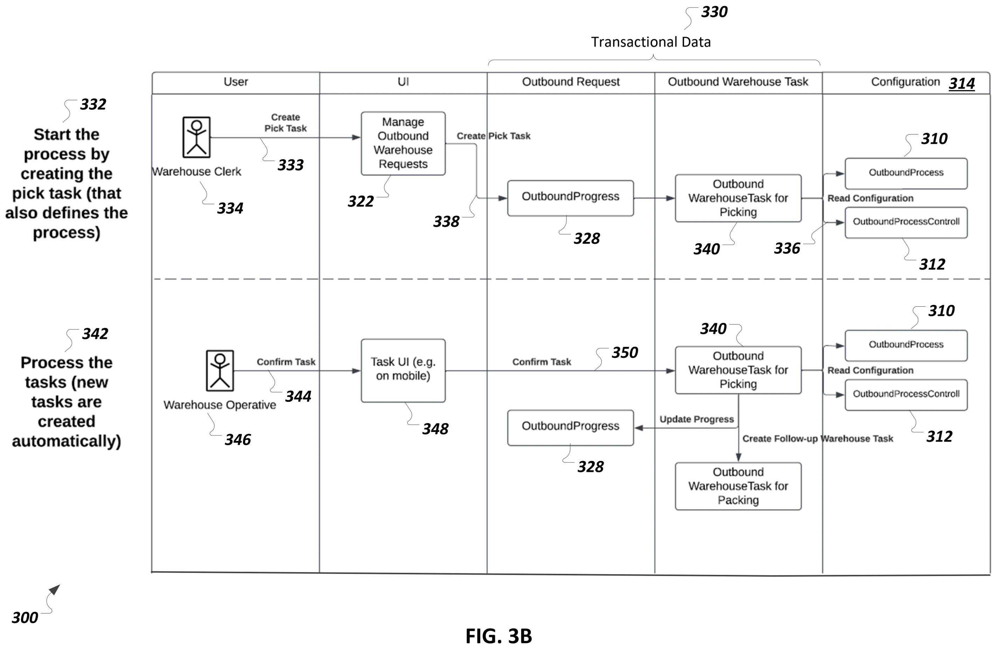

Referring now to FIG. 3B, the method 300 can include a task creation phase 332 for an initial task for an instance of the outbound process. At 333, a user 334 (which may be the same user as the user 320) can interact with the warehouse request management application 322 to create the initial task, which in the example of FIG. 3 is a pick task. Results of the user 334 interacting with the warehouse request management application 322 can include: 1) a reading 336 of the configured OutboundProcess instance 310 and the configured OutboundProcessControl instance 312 (e.g., to identify a first defined task (e.g., the picking task)); and 2) a create pick task command 338 (e.g., sent to the orchestrator) that results in creation of an instance 340 of an OutboundWarehouseTask entity that represents the picking task.

The method 300 can include a task processing phase 342. At 344, in the task processing phase 342, a user 346 (e.g., a warehouse operator) can interact with a task management application 348 (e.g., on a mobile device). For example, the user 346 can confirm the picking task, which can result in a confirm task message 350 (e.g., sent to the orchestrator) that results in updating of the OutboundWarehouseTask instance 340. Other interactions by the user 346 with the task management application 348, such as input(s) that indicate task progress or completion, can result in further updates to the OutboundWarehouseTask instance 340 and a corresponding OutboundProgress instance 328. Further reads of the configured OutboundProcess instance 310 and the configured OutboundProcessControl instance 312 for configuration information may be performed, as appropriate or necessary. For instance, when the picking task is complete, the orchestrator can read the OutboundProcessControl instance 312, identify a next task (e.g., a packing task), and create an instance 352 of the OutboundWarehouseTask entity to represent the next task. The user 346 (or another warehouse user) can be informed of the next task, and task progress, completion, and tracking can continue for the next task (and other subsequent tasks of the warehouse outbound process, in turn).

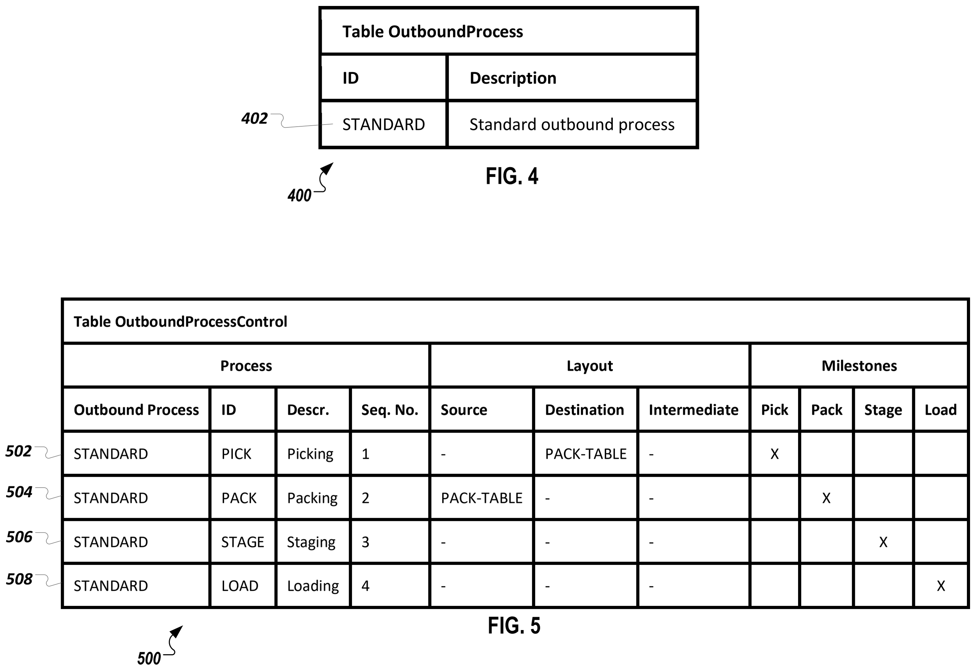

FIGs. 4-7D illustrate various data model entity instances for a first warehouse process example. FIG. 4 illustrates an example table 400 corresponding to an example outbound process entity instance. The table 400 can represent an instance of the OutboundProcess entity, for example. When a warehouse request is created, the warehouse request can be automatically or manually assigned to a particular process instance. In the example of FIG. 4, a row 402 defines a standard warehouse process for the first warehouse process example that is continued in discussions of FIGs. 5-7D below. Associated process control task definitions, described below with respect to FIG. 4, include an identifier of "STANDARD" included in the row 402.

FIG. 5 illustrates an example table 500 corresponding to outbound process control definitions. The table 500 can store instances of the OutboundProcessControl entity, for example. The table 500 can define multiple process steps that are assigned to an outbound process. The way an outbound process may be physically executed in a warehouse can differ depending on differences in source location, destination location, product, or customer requirements. For instance, while a packing step may be skipped when picking a full pallet and goods can be brought directly to a staging area, unpacked stock may often be first packed at a packing station to prepare the stock for transport. Accordingly, the table 500 should enable flexible definition of processes that specify the steps in which a product moves through the warehouse to its destination.

In the example of FIG. 5, each row of the table 500 refers to the outbound process with identifier "STANDARD" (e.g., corresponding to the table 400 of FIG. 4). Each row of the table 500 can include information for a source and/or destination associated with a respective process step, any applicable intermediate locations, and information indicating which process milestones may be completed upon completion of the process step.

In the example of FIG. 5, the STANDARD outbound process is modeled using rows 502, 504, 506, and 508 to have four steps: (e.g., "PICK", "PACK", "STAGE", and "LOAD," respectively). Each of the steps can result in a setting of one corresponding milestone on a warehouse request item. As described in further examples below, a configuration defined using the OutboundProcessControl entity enables introduction of customer-specific steps (e.g., for labelling, value-added services (VAS), or quality inspections). The table 500 can be modified to introduce or modify entries (e.g., using a user interface that does not require involvement of information technology personnel).

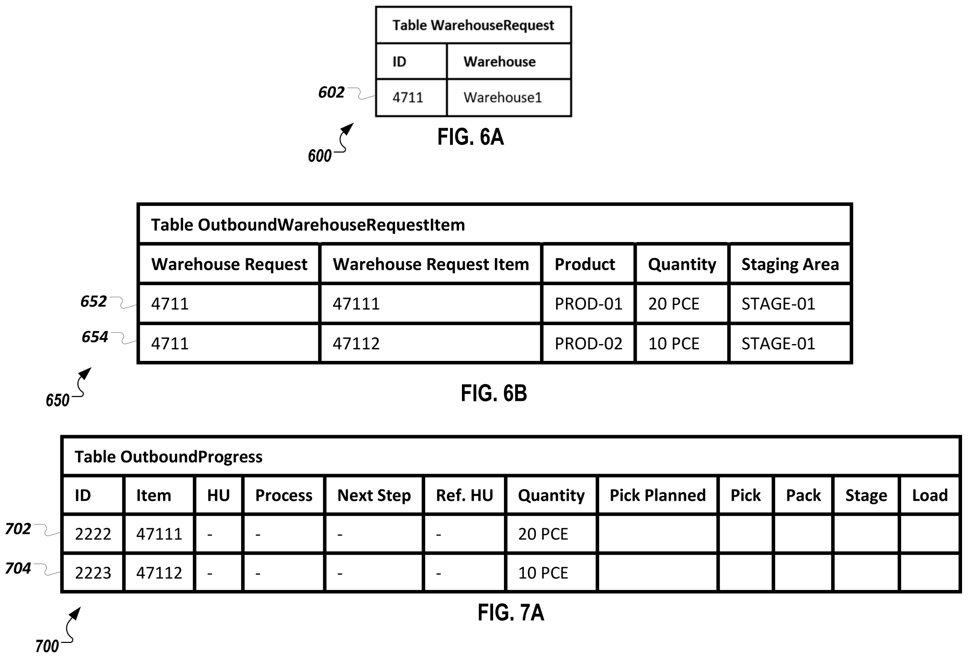

FIG. 6A illustrates an example table 600 for warehouse requests. A row 602 in the table 600 represents a warehouse request with an identifier of "4711" for a warehouse with a warehouse identifier of "Warehouse 1". The warehouse request identifier 4711 can be included in associated warehouse request item instances.

FIG. 6B illustrates an example table 650 for warehouse request items. Rows 652 and 654 represent warehouse request items with identifiers 47111 and 47112, respectively, that are included in a warehouse request with an identifier of 4711. The rows 652 and 654 specify that the warehouse request includes twenty pieces of a PROD-01 product and ten pieces of a PROD-02 product, respectively. The rows 652 and 654 each include a specification of a STAGE-01 staging area that has been specified by a transportation planner, for example (e.g., indicating that the items are to arrive, after picking and packing, at the STAGE-01 staging area).

FIG. 7A illustrates an example outbound progress table 700. The table 700 can store instances of the OutboundProgress entity, for example. The table 700 includes rows 702 and 704 that reflect an initial stage of warehouse request items 47111 and 47112, respectively, after a warehouse request has been received but before the outbound process has started.

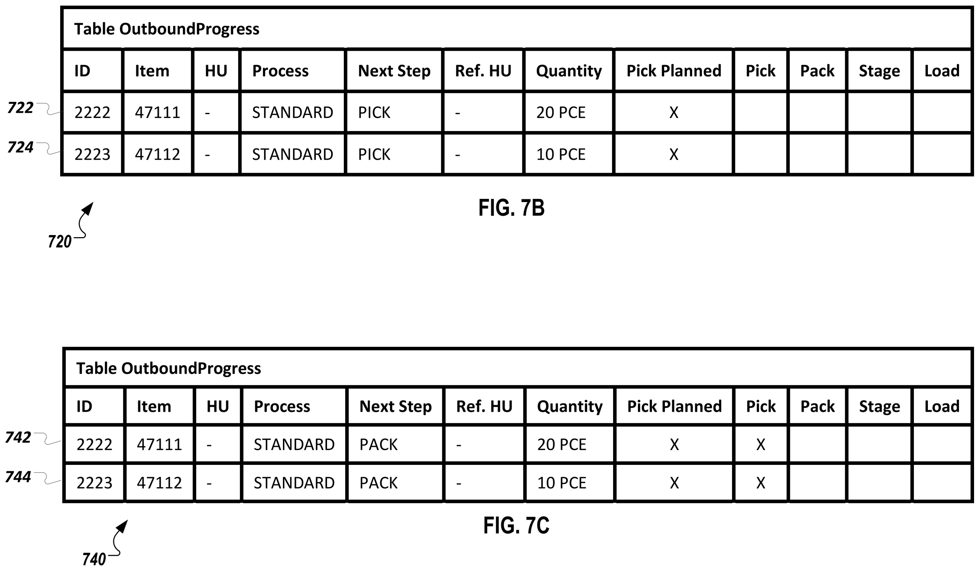

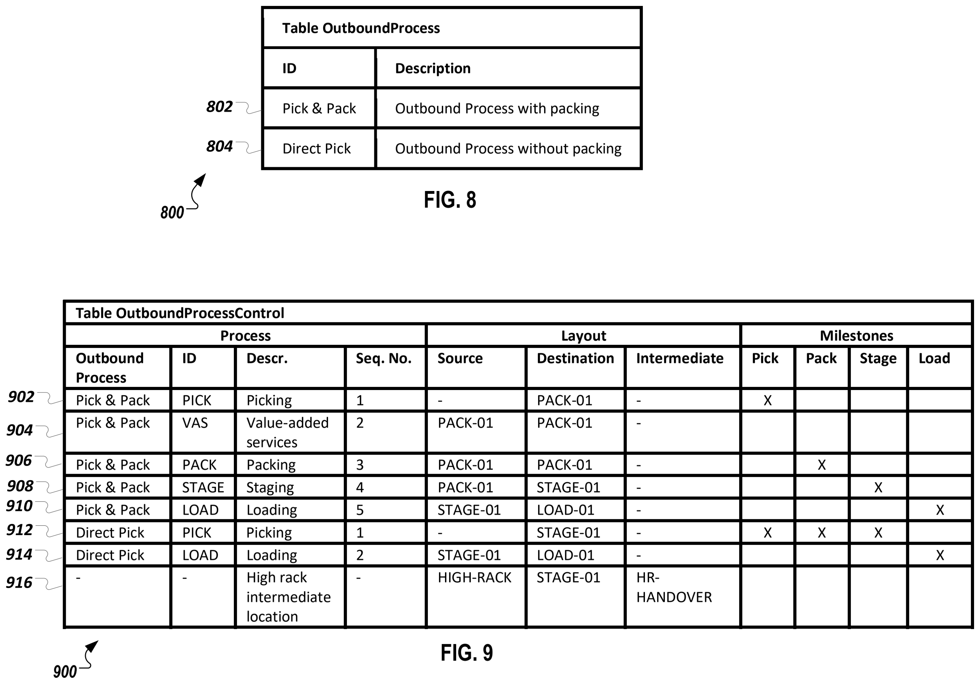

FIG. 7B illustrates an example updated outbound progress table 720. The updated outbound progress table 720 can represent progress of the process after the outbound process has been started. Rows 722 and 724 corresponding to items with identifiers of 47111 and 47112 each now have a pick planned flag set and a next step set to PICKING, in accordance with a first row (e.g., the row 502) of the outbound process control table 500 of FIG. 5. Corresponding warehouse task entries can be created in a warehouse task table (not shown). Warehouse tasks are described in more detail below with respect to a second outbound process example of FIGs. 8-32.

For example, a first pick task can be created for the row 722 and a second pick task can be created for the row 724. A warehouse operator can, after the corresponding warehouse tasks are created, proceed to a first bin and pick twenty items of the PROD-01 product and proceed, for example, to a second bin and pick ten items of the PROD-02 product and bring both sets of items to a packing work center. The warehouse operator can confirm completion of the picking tasks.

FIG. 7C illustrates an example updated outbound progress table 740. The updated outbound progress table 740 can represent progress of the process after picking tasks for the warehouse request have been completed (e.g., all requested item quantities have been picked). For instance, rows 742 and 744 for items with identifiers of 47111 and 47222, respectively, each have a flag set for a picking task. Additionally, the rows 742 and 744 each have a next step entry set to PACK, indicating that a next process step is packing for those respective items. Picking task completion can trigger a process orchestrator to update the rows 742 and 744 based on a next process step defined for the outbound process, for example. The orchestrator can also trigger creation of two new warehouse tasks for packing the two respective sets of picked items into a single handling unit.

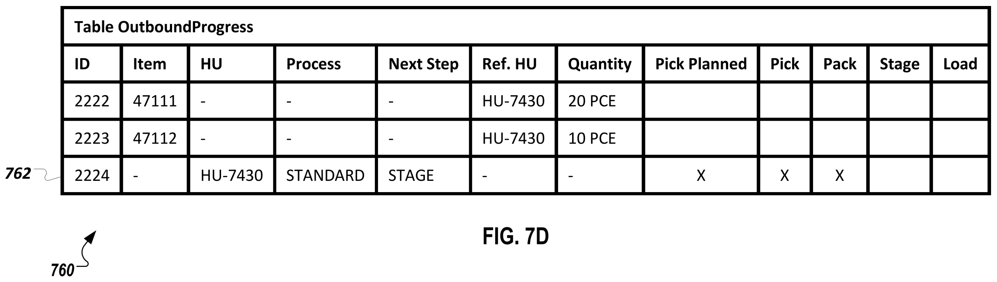

FIG. 7D illustrates an example updated outbound progress table 760. The updated outbound progress table 740 can represent progress of the process after packing tasks for the warehouse request have been completed. For instance, a new row 762 has been added to the updated outbound progress table 760 that represents packing of the two sets of product items into a single handling unit with a handling unit identifier of HU-7430. The row 762 includes a first indication indicating that packing into the handling unit has completed and a second indication indicating that a next process step is a staging step. Further tracking can be handled by the orchestrator based on the handling unit, rather than on respective warehouse request items. For instance, other process tasks can include moving the handling unit to an intermediate location or to a destination location for staging and/or loading. The orchestrator can update corresponding WarehouseRequestItem instances to refer to the handling unit.

FIG. 8 illustrates an outbound process table 800 for a second example. The table 800 includes entries 802 and 804 for a first process that involves packing and a second process that involves a direct picking without packing, respectively. A related OutboundProcessControl entity instance can refer to "Pick & Pack" or "Direct Pick" process identifiers included in the entries 802 or 804, respectively.

The second example, further described below with respect to FIGs. 9-32, includes descriptions and tracking of detailed outbound processes including several scenarios that can happen in a warehouse. The second example includes illustrations of how quantity and status updates to a warehouse request item can be performed in various types of situations. For instance, the second example includes descriptions of the following scenarios: 1) full-pallet pick (e.g., skip packing); 2) layout-oriented storage control (e.g., based on a layout of a warehouse, a product can be moved from a source location to an intermediate location before the product is moved to a destination location; 3) process steps that do not trigger any update to milestones for a respective outbound warehouse request item (e.g., value-added services (VAS)); 4) picking with a picking handling unit; 5) direct pick (e.g., picking with bare hands); 6) packing and unpacking warehouse request items; and 7) exceptional cases (e.g., a product breaks during packing and needs to be picked again).

FIG. 9 illustrates an example outbound process control table 900. The table 900 includes entries 902-916 that relate to process steps of picking, VAS, packing, staging, loading, direct picking, loading of direct-picked items, and high-rack handling for an intermediate location, respectively. The orchestrator can refer to the entries 902-916 when managing tasks and progress tracking for a warehouse request item that is assigned to a process included in the outbound process table 800 of FIG. 8.

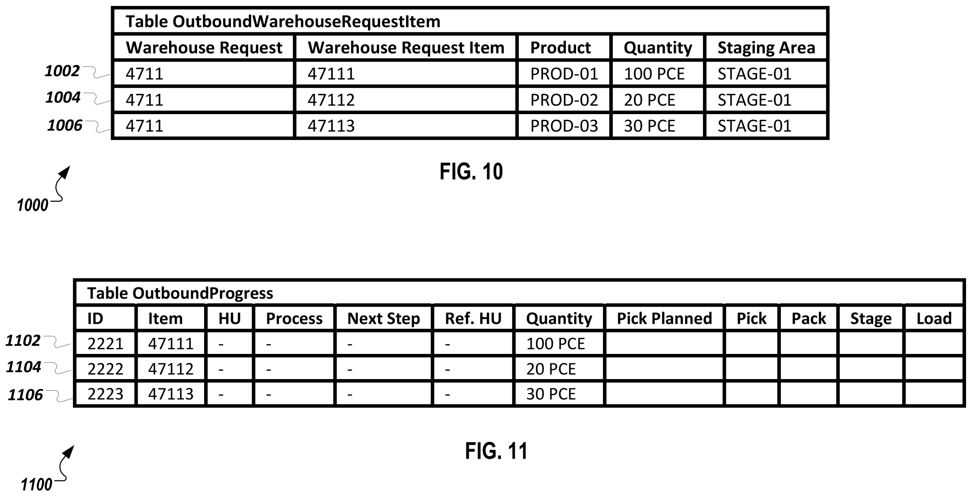

FIG. 10 illustrates an example warehouse request item table 1000. The table 1000 includes entries 1002, 1004, and 1006 representing warehouse request items with identifiers of 47111, 47112, and 47113, respectively, that each refer to a warehouse request with an identifier of 4711 (e.g., where the warehouse request with identifier 4711 may be represented in a related warehouse request table (not shown)). The second example includes illustrations of tracking of progress of these items.

FIG. 11 illustrates an example outbound progress table 1100. The table 1100 includes entries 1102, 1104, and 1106 for warehouse request items with identifiers of 47111, 47112, and 47113, respectively (e.g., corresponding to the entries in the warehouse request item table 1000 of FIG. 10). The orchestrator can create the entries 1102, 1104, and 1106 in the outbound progress table 1100 in response to creation of the corresponding outbound warehouse request items.

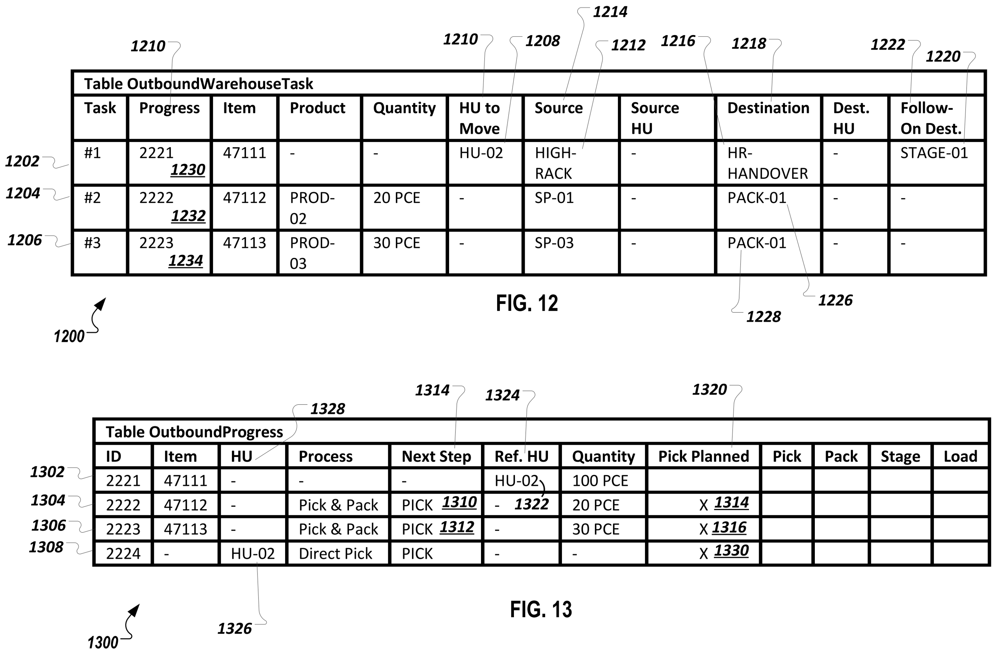

FIG. 12 illustrates an example outbound warehouse task table 1200. The table 1200 includes entries 1202, 1204, and 1206 that have been created by the orchestrator for respective warehouse request items with identifiers of 47111, 47112, and 47113, respectively, to represent picking tasks for those items (e.g., a first task for those items as defined by configuration data). An "HU-02" value 1208 for an "HU to Move" attribute 1210 indicates that the item with identifier of 47111 should be picked as a full pallet (e.g., indicated by the HU identifier "HU-02") and therefore does not need to be packed separately. However, the pallet comes from a high rack (e.g., indicated by a source value 1212 of "HIGH-RACK" for a Source attribute 1214). The item can be first routed to an intermediate location (e.g., indicated by a value 1216 of "HR-HANDOVER" for a Destination attribute 1218. A staging destination 1220 of "STAGE-01" is stored for a Follow-on Destination attribute 1222 so that the system can automatically create a follow-on task to complete the picking process step when the first task is confirmed.

The items with identifiers of 47112 and 47113 can be picked together and then packed at a same packing station (e.g., as indicated by "PACK-01" values 1224 and 1226, respectively, for the Destination attribute 1218 ) before being brought to a final destination location. Each of the entries 1202, 1204, and 1206 include a progress value 1230, 1232, or 1234, respectively, that links each respective task entry to a corresponding outbound progress entity instance.

FIG. 13 illustrates an example updated outbound progress table 1300. The creation of the picking warehouse tasks (e.g., represented by the entries 1202, 1204, and 1206 of FIG. 12, respectively) can result in an update by the orchestrator of corresponding OutboundProgress entries in the outbound progress table, as illustrated by updated entries 1302, 1304, and 1306, respectively. For instance, the entries 1304, and 1306 each include a "PICK" value 1310 or 1312 for a "Next Step" attribute 1314 and marks 1316 or 1318 for a Pick Planned flag attribute 1320, respectively. Since the item with identifier of 47111 is picked as a complete handling unit of HU-02, the entry 1302 includes an HU-02 reference 1322 for a Reference-HU attribute 1324 and a null or empty value 1326 for the Next Step attribute 1314, since progress will be subsequently tracked via the handling unit rather than the item. Accordingly, the orchestrator has added an entry 1308 to the table 1300 to track progress of the handling unit. The entry 1308 includes an HU-02 value 1326 for an HU attribute 1328 and a mark 1330 for the Pick Planned flag attribute 1320, indicating that picking has been planned for the handling unit.

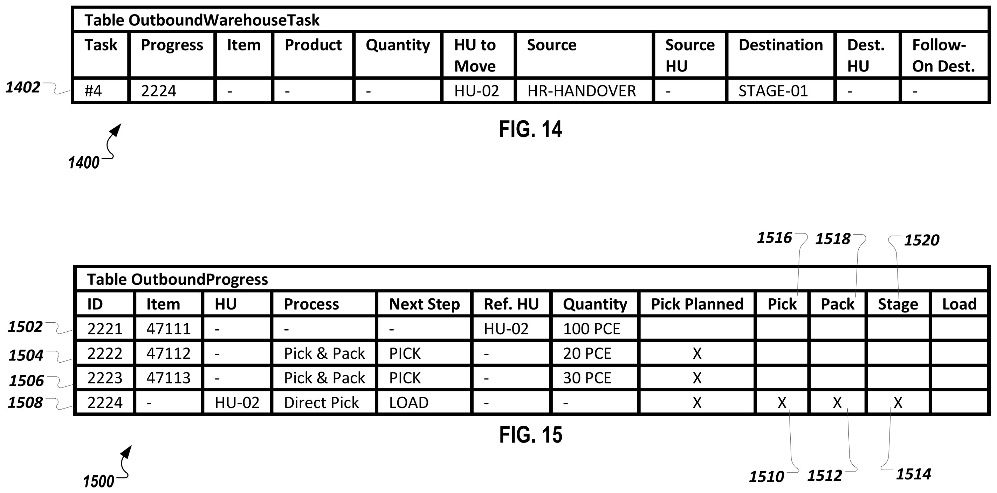

FIG. 14 illustrates an example updated outbound warehouse task table 1400. A warehouse operator can confirm completion of the task #1 corresponding to the entry 1202 in the table 1200, e.g., after the pallet for the item with identifier 47111 has been picked and moved to the intermediate HR-HANDOVER location. However, the movement to the intermediate location does not yet lead to a status update for the item, since the process control configuration states that picking is only completed when the pallet is in the staging area "STAGE-01". Accordingly, the orchestrator can create a follow-on task #4 as illustrated by an additional task entry 1402, representing a task to move the pallet from the handover location to the staging area. The entry 916 in the outbound process control table 900 is a process-independent entry that defines that every item / HU that is moved from the HIGH-RACK to STAGE-01 should be moved via another intermediate location in the warehouse (e.g., where the intermediate location is referred to as HR-HANDOVER). The orchestrator can know to create a first task for movement from the HIGH-RACK to HR-HANDOVER and a follow-up task from HR-HANDOVER to the final destination STAGE-01. In general, if a task is confirmed and the referenced stock item is not yet at the defined destination of the corresponding process step, the orchestrator can automatically create a follow-up task.

FIG. 15 illustrates an example updated outbound progress table 1500. The table 1500 can represent tracked progress after the second task for the item with identifier of 47111 (e.g., movement of the pallet from the handover location to the staging area) has been completed. For instance, an updated entry 1508 corresponding to the entry 1308 of the table 1300 now has marks 1510, 1512, and 1514 for Pick Completed 1516, Pack Completed 1518, and Staging Completed 1520 attributes, respectively, indicating that picking, packing, and staging are complete for the item 47111 portion of the warehouse request. No further progress has yet occurred for items with identifiers 47112 and 47113 (as illustrated by entries 1504 and 1506 matching corresponding entries 1304 and 1306, respectively).

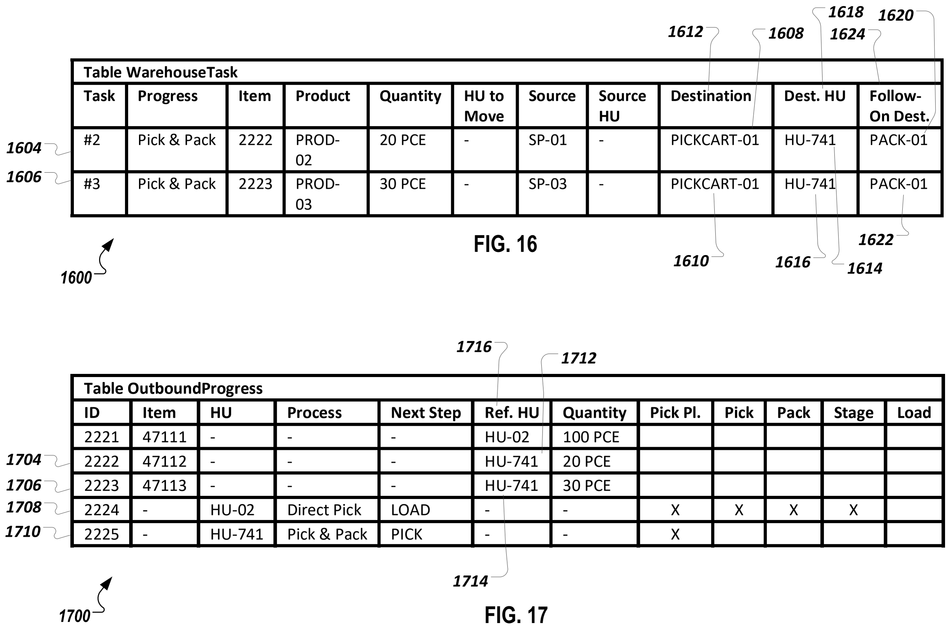

FIG. 16 illustrates an example updated outbound warehouse task table 1600. The table 1600 includes updated entries 1604 and 1606 (corresponding to the entries 1202 and 1204 of the table 1200, respectively). A warehouse operator can perform a picking task for the items with identifiers 47112 and 47113, e.g., by picking those items together on a pick cart into a handing unit (that may be a temporary handling unit). Accordingly, the updated entries 1604 and 1606 include PICKCART-01 values 1608 or 1610 for a Destination attribute 1612, respectively, and HU-741 handling unit identifiers 1614 or 1616 for a Destination-HU attribute 1618, respectively. The handling unit with the two sets of items is to be brought together to a packing station, as indicated by PACK-01 values 1620 or 1622 for a Follow-On Destination attribute 1624, respectively.

The picking handling unit (e.g., PACK-01) can therefore be entered by a warehouse operator as a destination when confirming warehouse tasks #2 and #3. Regarding the pick cart, even if the pick-cart is a moving resource in the warehouse and the picking handling unit is only used temporarily, recording the Destination attribute 1612 values enables the system to know exactly where to find the two request items during that part of the process.

FIG. 17 illustrates an example updated outbound progress table 1700. The table 1700 includes updated entries 1704 and 1706 that correspond to the entries 1504 and 1506, respectively. The updated entries 1704 and 1706 now include HU-741 handling unit references 1712 or 1714 for a reference-HU attribute 1716, respectively, indicating the progress for the items with identifiers 47112 or 47113 are now tracked via the HU-741 handling unit. Accordingly, the orchestrator creates a new entry 1710 for tracking progress of that handling unit.

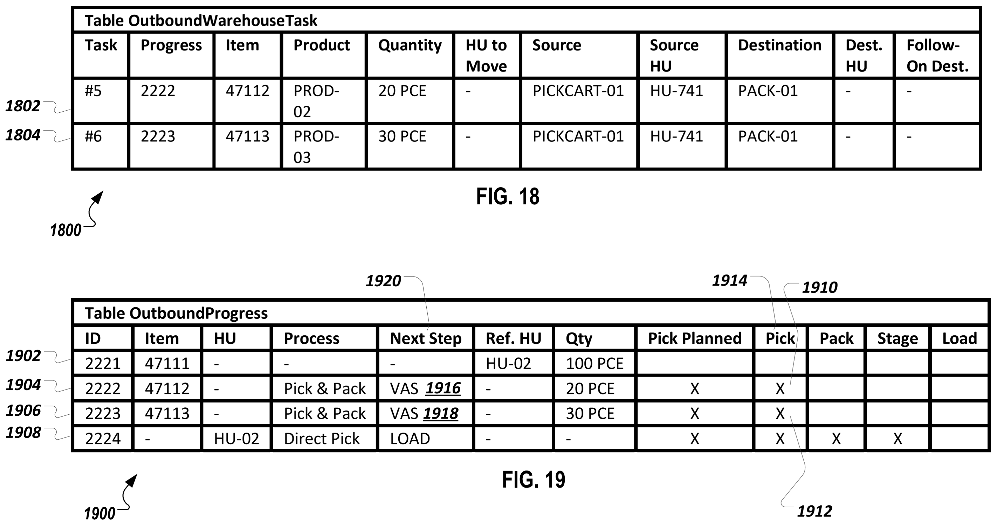

Referring again briefly to FIG. 16, since the PICKCART-01 values 1608 and 1610 for the Destination attribute 1612 differ from the corresponding original destination values 1226 and 1228 and no corresponding exception has been specified, new tasks can be automatically created (as shown below with respect to FIG. 18), after tasks #2 and #3 have been confirmed, for bringing the picked products via the picking handling unit to the packing station.

FIG. 18 illustrates an example updated outbound warehouse task table 1800. The table 1800 includes new entries 1802 and 1804 representing tasks #5 and #6 of bringing the picked products for items with identifier of 47112 or 47113, respectively, via the picking handling unit to the packing station with identifier of PACK-01. The warehouse operator can confirm tasks #5 and #6 when that movement is complete.

FIG. 19 illustrates an example updated outbound progress table 1900. The table 1900 reflects that picking is now complete for items with identifier 47112 or 47113 now that the follow-on tasks #5 and #6 have been confirmed. For instance, updated entries 1904 and 1906 corresponding to entries 1704 and 1706 now have a mark 1910 or 1912 for a Pick Completed attribute 1914, respectively. Additionally, the updated entries 1904 and 1906 include next task values VAS 1916 or 1918, respectively, for a Next Step attribute 1920, based, for instance, on the entry 904 in the outbound process control table 900.

Moreover, since the items with identifier of 47112 or 47113 are no longer in the picking handling unit, the orchestrator has deleted the corresponding entry in the OutboundProgress table. For example, the updated outbound progress table 1900 now no longer has an entry related to the HU-741 handling unit (such as the entry 1710 in the table 1700).

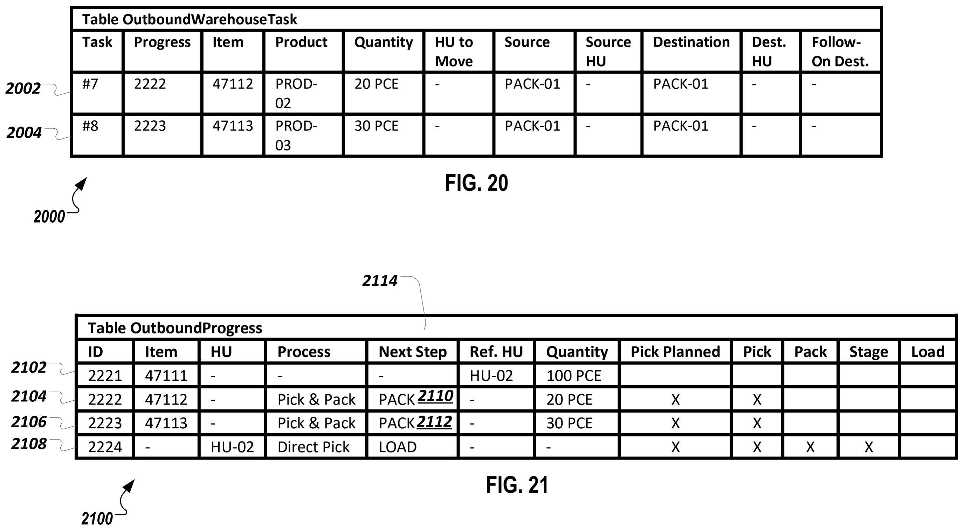

FIG. 20 illustrates an example updated outbound warehouse task table 2000. The orchestrator, in response to completion of picking for the items with identifier of 47112 or 47113 can, based on the process control configuration (e.g., the entry 904 of the table 900), create tasks #7 and #8 corresponding to new entries 2002 and 2004 in the table 2000. The tasks #7 and #8 correspond to value added service tasks to be performed after picking and before packing (e.g., inclusion of a flyer with the picked items).

FIG. 21 illustrates an example updated outbound progress table 2100. The table 2100 reflects completion of the VAS tasks #7 and #8. The confirmation of these tasks can trigger an update to a next process step (e.g., as indicated by PACK next step values 2110 and 2112 for a Next Step attribute 2114) but not a milestone update, as the process configuration does not indicate any milestone status update for this step.

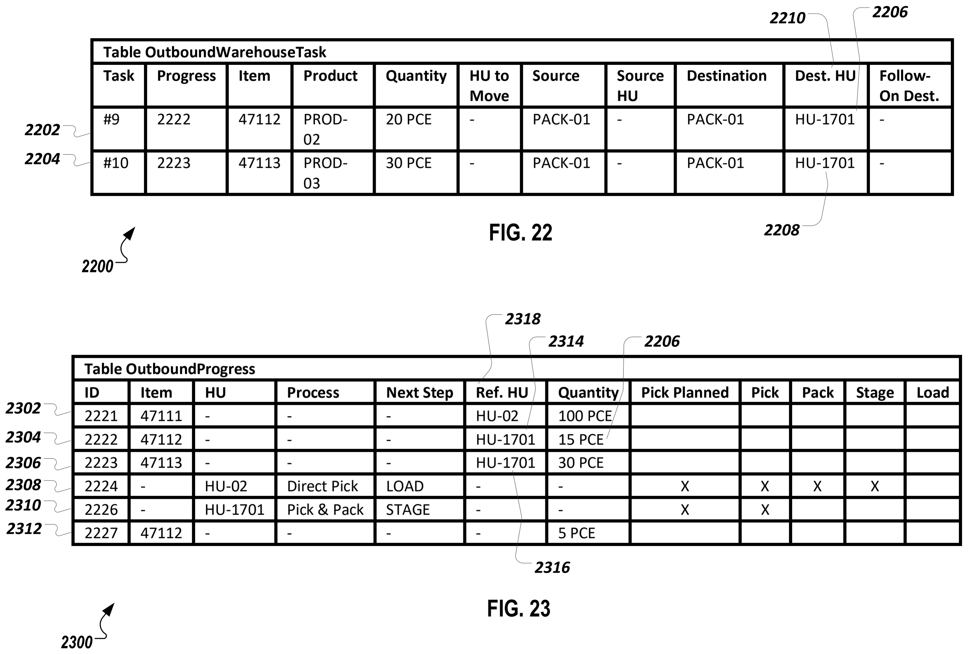

FIG. 22 illustrates an example updated outbound warehouse task table 2200. The table 2200 includes new entries 2202 and 2204 for tasks #9 and #10, respectively, for packing the items with identifiers 47112 or 47113 (and any VAS items) into a new handling unit, as indicated by HU-1701 handling unit references 2206 and 2208 for a Destination HU attribute 2210, respectively.

FIG. 23 illustrates an example updated outbound progress table 2300. The table 2300 includes updated entries 2304 and 2306 corresponding to the entries 2104 and 2106 that now have HU-1701 handling unit references 2314 or 2316 for a reference HU attribute 2318, respectively. During packing, a warehouse operator has packed the items with identifier 47113 but has only packed 15 of the 20 items with identifier 47112 since five items are broken during packing. The warehouse operator confirms warehouse task #9 with a partial quantity and a corresponding exception code. Accordingly, a partial quantity value 2320 of fifteen is recorded for a quantity attribute 2320 in the progress table. Additionally, a new entry 2312 is added to the table 2300 to track re-picking of the five broken items.

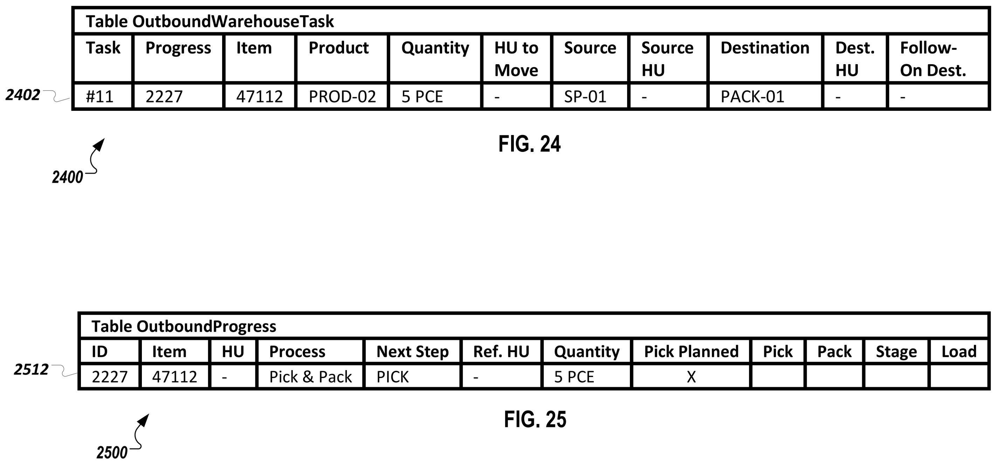

FIG. 24 illustrates an example updated outbound warehouse task table 2400. The table 2400 includes a new entry 2402 for a task #11 for repicking five items of item with identifier 47112.

FIG. 25 illustrates an example updated outbound progress table 2500. The table 2500 includes (among other entries) an updated entry 2512 (corresponding to the entry 2312 of the table 2300). The updated entry 2512 reflects that picking has been planned for five items of item with identifier 47112 and that a next step is picking.

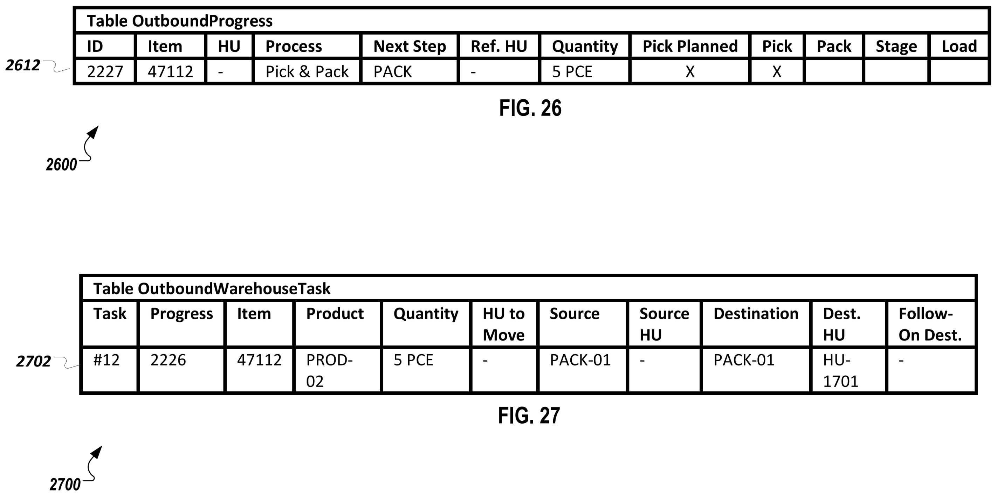

FIG. 26 illustrates an example updated outbound progress table 2600. The table 2600 includes an updated entry 2612 (corresponding to the entry 2512 of the table 2500). The updated entry 2612 now includes, in response to a warehouse operator confirming task #11 of re-picking the five items of item with identifier 47112, indications of completion of picking and a next step of packing.

FIG. 27 illustrates an example updated outbound warehouse task table 2700. The table 2700 includes a new entry 2702 corresponding to a task #12 for packing the remaining 5 pieces into the existing HUI-1701 handling unit.

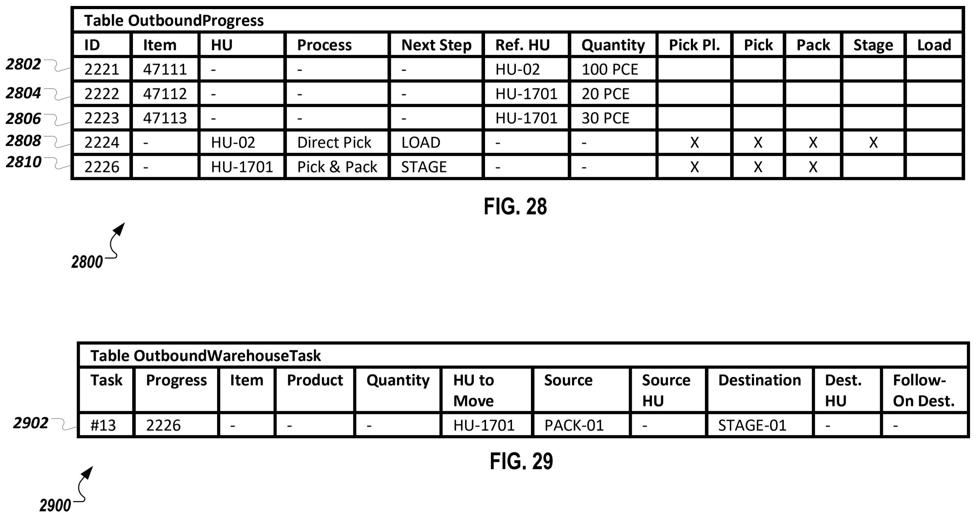

FIG. 28 illustrates an example updated outbound progress table 2800. The table 2800 reflects updates performed in response to a warehouse operator confirming the task #12 of packing the remaining five units of item with identifier 47112 into the HU-1701 handling unit. The table 2800 now includes an entry 2810, corresponding to the entry 2310 of the table 2300, but not an entry corresponding to the entry 2312 (e.g., the entry 2310 has been essentially merged with the entry 2312 into the entry 2810). The process can continue with progress updating of the entry 2810 for the handling unit HU-1701 as originally planned, as if the extra warehouse tasks for repicking the damaged five units had not occurred.

FIG. 29 illustrates an example updated outbound warehouse task table 2900. The table 2900 now includes an entry 2902 for a task #13 for taking the handling unit HU-1701 to a staging location with an identifier of STAGE-01.

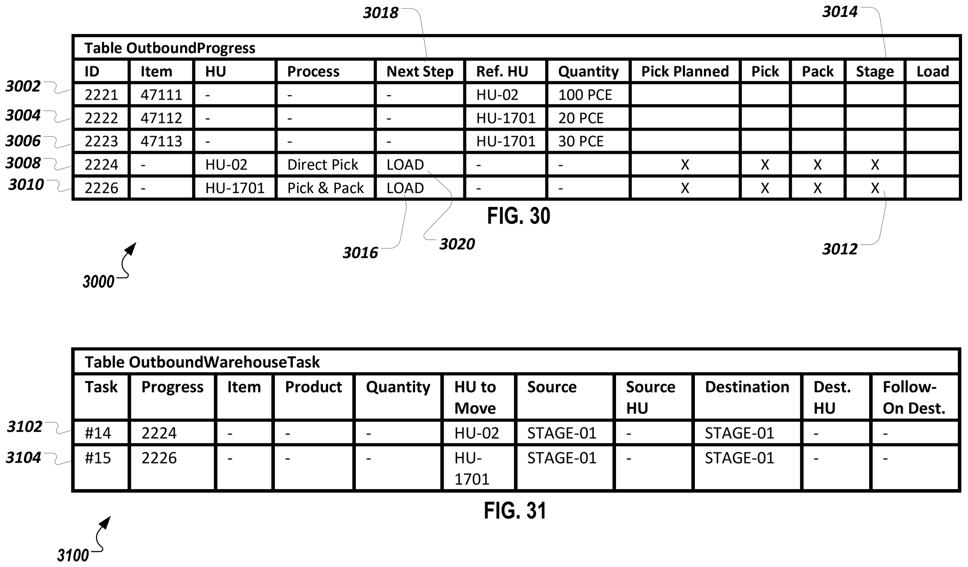

FIG. 30 illustrates an example updated outbound progress table 3000. The table 3000 reflects updates performed in response to a warehouse operator confirming the task #13 of moving the handling unit HU-1701 to the staging area. For instance, an entry 3010 corresponding to the entry 2810 now has a mark 3012 for a staging complete attribute 3014. Additionally, the entry 3010 has a next step value 3016 of LOAD for a Next Step attribute 3018. The next step value 3016 and a next step value 3020 of LOAD for the HU-02 including item with identifier 47111 items collectively indicate that all warehouse request items are now ready for loading.

FIG. 31 illustrates an example updated outbound warehouse task table 3100. The table 3100 includes new entries 3102 and 3104 for tasks #14 and #15 for loading the handling units HU-02 and HU-1701, respectively. In this example, the tasks #14 and #15 represent loading the handling units onto a docked truck that is considered to also be at the staging area (rather than a separate defined location).

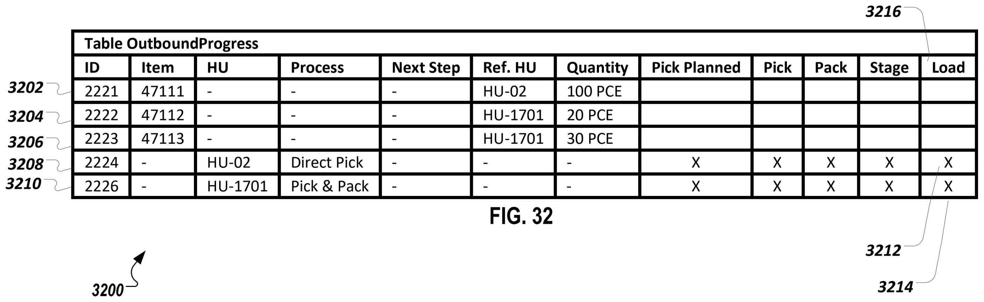

FIG. 32 illustrates an example updated outbound progress table 3200. The table 3200 includes updated entries 3208 and 3210 corresponding to the entries 3008 and 3010 that have been updated, in response to a warehouse operator confirming the tasks #14 and #15, to now include marks 3212 or 3214 for a loading complete attribute 3216. As loading is a last process step defined in the configuration, the process for the warehouse request is now completed and a goods issue posting for the warehouse request can occur.

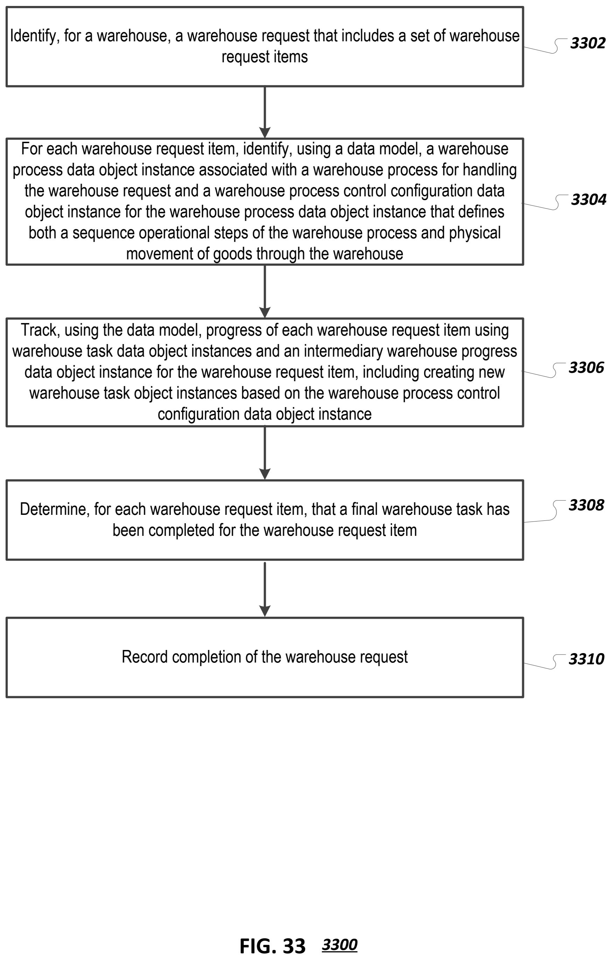

FIG. 33 is a flowchart of an example method for process control for warehouse operations. It will be understood that method 3300 and related methods may be performed, for example, by any suitable system, environment, software, and hardware, or a combination of systems, environments, software, and hardware, as appropriate. For example, one or more of a client, a server, or other computing device can be used to execute method 3300 and related methods and obtain any data from the memory of a client, the server, or the other computing device. In some implementations, the method 3300 and related methods are executed by one or more components of the system 100 described above with respect to FIG. 1. For example, the method 3300 and related methods can be executed by the server 102 of FIG. 1.

At 3302, a warehouse request that includes a set of warehouse request items is identified for a warehouse.

At 3304, for each warehouse request item, a warehouse process data object instance associated with a warehouse process for handling the warehouse request and a warehouse process control configuration data object instance for the warehouse process data object instance are identified using a data model. The warehouse process control configuration data object instance defines both a sequence of operational steps of the warehouse process and physical movement of goods through the warehouse.

At 3306, progress of each warehouse request item is tracked, using the data model and using warehouse task data object instances and an intermediary warehouse progress data object instance for the warehouse request item, including creating new warehouse task object instances based on the warehouse process control configuration data object instance.

At 3308, a determination is made, for each warehouse request item, that a final warehouse task has been completed for the warehouse request item; and

At 3310, completion of each warehouse request is recorded.
The following numbered clauses represent embodiments that may be implemented.
1. A computer-implemented method comprising:
   identifying, for a warehouse, a warehouse request that includes a set of warehouse request items;
   for each warehouse request item, identifying, using a data model, a warehouse process data object instance associated with a warehouse process for handling the warehouse request and a warehouse process control configuration data object instance for the warehouse process data object instance that defines both a sequence of operational steps of the warehouse process and physical movement of goods through the warehouse;
   tracking, using the data model, progress of each warehouse request item using warehouse task data object instances and an intermediary warehouse progress data object instance for the warehouse request item including creating new warehouse task object instances based on the warehouse process control configuration data object instance;
   determining, for each warehouse request item, that a final warehouse task has been completed for the warehouse request item; and
   recording completion of the warehouse request.
2. The computer-implemented method of clause 1, wherein a target location of a previous warehouse task data objects defines a source location of a next warehouse task in the sequence.
3. The computer-implemented method of clause 1, wherein the warehouse request is triggered by an order, an internal transfer, a return to a vendor, or a production supply.
4. The computer-implemented method of clause 1, wherein the warehouse request is an outbound warehouse request, an inbound warehouse request, or an internal warehouse request.
5. The computer-implemented method of clause 1, further comprising using intermediate warehouse progress data object instances to track different request item quantities through different warehouse process steps.
6. The computer-implemented method of clause 1, further comprising:
   identifying a handling unit for multiple quantities of a warehouse request item;
   creating a first intermediary warehouse progress data object instance for tracking the handling unit; and
   tracking progress of the multiple quantities of the warehouse request item and the handling unit using the first intermediary warehouse progress data object instance.
7. The computer-implemented method of clause 1, wherein using intermediary warehouse progress data object instances comprises tracking different quantities of a warehouse request item at different process steps and at different warehouse locations.
8. The computer-implemented method of clause 1, wherein the warehouse process control configuration data object instance specifies which completion of which warehouse process steps meet different process milestones.
9. The computer-implemented method of clause 8, wherein intermediary warehouse progress data object instances track, for a warehouse request item, which milestones have been completed for the warehouse request item.
10. The computer-implemented method of clause 1, wherein intermediary warehouse progress data object instances indicate a next process step for a warehouse request item.
11. The computer-implemented method of clause 1, wherein tracking, using the data model, progress of each warehouse request item using warehouse task object instances and an intermediate warehouse progress data object instance for the warehouse request item comprises:
   receiving an indication of a first task completion;
   updating the intermediary warehouse progress data object instance;
   reading the warehouse process control configuration data object instance to identify a next task; and
   creating a warehouse task object instance for the next task.
12. The computer-implemented method of clause 1, further comprising:
   identifying an exception condition for a warehouse request item that has a first intermediary warehouse progress data object instance;
   creating a new intermediary warehouse progress data object instance for handling the exception condition;
   handling the exception condition using the new intermediary warehouse progress data object instance; and
   resuming the warehouse process using the first intermediary warehouse progress data object instance.
13. A system comprising:
   one or more computers; and
   a computer-readable medium coupled to the one or more computers having instructions stored thereon which, when executed by the one or more computers, cause the one or more computers to perform operations comprising
      identifying, for a warehouse, a warehouse request that includes a set of warehouse request items;
      for each warehouse request item, identifying, using a data model, a warehouse process data object instance associated with a warehouse process for handling the warehouse request and a warehouse process control configuration data object instance for the warehouse process data object instance that defines both a sequence of operational steps of the warehouse process and physical movement of goods through the warehouse;
      tracking, using the data model, progress of each warehouse request item using warehouse task data object instances and an intermediary warehouse progress data object instance for the warehouse request item including creating new warehouse task object instances based on the warehouse process control configuration data object instance;
      determining, for each warehouse request item, that a final warehouse task has been completed for the warehouse request item; and
      recording completion of the warehouse request.
14. The system of clause 13, wherein a target location of a previous warehouse task data objects defines a source location of a next warehouse task in the sequence.
15. The system of clause 13, wherein the warehouse request is triggered by an order, an internal transfer, a return to a vendor, or a production supply.
16. The system of clause 13, wherein the warehouse request is an outbound warehouse request, an inbound warehouse request, or an internal warehouse request.
17. A computer program product encoded on a non-transitory storage medium, the product comprising non-transitory, computer readable instructions for causing one or more processors to perform operations comprising:
   identifying, for a warehouse, a warehouse request that includes a set of warehouse request items;
   for each warehouse request item, identifying, using a data model, a warehouse process data object instance associated with a warehouse process for handling the warehouse request and a warehouse process control configuration data object instance for the warehouse process data object instance that defines both a sequence of operational steps of the warehouse process and physical movement of goods through the warehouse;
   tracking, using the data model, progress of each warehouse request item using warehouse task data object instances and an intermediary warehouse progress data object instance for the warehouse request item including creating new warehouse task object instances based on the warehouse process control configuration data object instance;
   determining, for each warehouse request item, that a final warehouse task has been completed for the warehouse request item; and
   recording completion of the warehouse request.
18. The computer program product of clause 17, wherein a target location of a previous warehouse task data objects defines a source location of a next warehouse task in the sequence.
19. The computer program product of clause 17, wherein the warehouse request is triggered by an order, an internal transfer, a return to a vendor, or a production supply.
20. The computer program product of clause 17, wherein the warehouse request is an outbound warehouse request, an inbound warehouse request, or an internal warehouse request.

The preceding figures and accompanying description illustrate example processes and computer-implementable techniques. But system 100 (or its software or other components) contemplates using, implementing, or executing any suitable technique for performing these and other tasks. It will be understood that these processes are for illustration purposes only and that the described or similar techniques may be performed at any appropriate time, including concurrently, individually, or in combination. In addition, many of the operations in these processes may take place simultaneously, concurrently, and/or in different orders than as shown. Moreover, system 100 may use processes with additional operations, fewer operations, and/or different operations, so long as the methods remain appropriate.

In other words, although this disclosure has been described in terms of certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure.

## Claims

1. A computer-implemented method comprising:
identifying, for a warehouse, a warehouse request that includes a set of warehouse request items;
for each warehouse request item, identifying, using a data model, a warehouse process data object instance associated with a warehouse process for handling the warehouse request and a warehouse process control configuration data object instance for the warehouse process data object instance that defines both a sequence of operational steps of the warehouse process and physical movement of goods through the warehouse;
tracking, using the data model, progress of each warehouse request item using warehouse task data object instances and an intermediary warehouse progress data object instance for the warehouse request item including creating new warehouse task object instances based on the warehouse process control configuration data object instance;
determining, for each warehouse request item, that a final warehouse task has been completed for the warehouse request item; and
recording completion of the warehouse request.

2. The computer-implemented method of claim 1, wherein a target location of a previous warehouse task data objects defines a source location of a next warehouse task in the sequence.

3. The computer-implemented method of any one of the preceding claims, wherein the warehouse request is triggered by an order, an internal transfer, a return to a vendor, or a production supply.

4. The computer-implemented method of any one of the preceding claims, wherein the warehouse request is an outbound warehouse request, an inbound warehouse request, or an internal warehouse request.

5. The computer-implemented method of any one of the preceding claims, further comprising using intermediate warehouse progress data object instances to track different request item quantities through different warehouse process steps.

6. The computer-implemented method of any one of the preceding claims, further comprising:
identifying a handling unit for multiple quantities of a warehouse request item;
creating a first intermediary warehouse progress data object instance for tracking the handling unit; and
tracking progress of the multiple quantities of the warehouse request item and the handling unit using the first intermediary warehouse progress data object instance.

7. The computer-implemented method of any one of the preceding claims, wherein using intermediary warehouse progress data object instances comprises tracking different quantities of a warehouse request item at different process steps and at different warehouse locations.

8. The computer-implemented method of any one of the preceding claims, wherein the warehouse process control configuration data object instance specifies which completion of which warehouse process steps meet different process milestones.

9. The computer-implemented method of claim 8, wherein intermediary warehouse progress data object instances track, for a warehouse request item, which milestones have been completed for the warehouse request item.

10. The computer-implemented method of any one of the preceding claims, wherein intermediary warehouse progress data object instances indicate a next process step for a warehouse request item.

11. The computer-implemented method of any one of the preceding claims, wherein tracking, using the data model, progress of each warehouse request item using warehouse task object instances and an intermediate warehouse progress data object instance for the warehouse request item comprises:
receiving an indication of a first task completion;
updating the intermediary warehouse progress data object instance;
reading the warehouse process control configuration data object instance to identify a next task; and
creating a warehouse task object instance for the next task.

12. The computer-implemented method of any one of the preceding claims, further comprising:
identifying an exception condition for a warehouse request item that has a first intermediary warehouse progress data object instance;
creating a new intermediary warehouse progress data object instance for handling the exception condition;
handling the exception condition using the new intermediary warehouse progress data object instance; and
resuming the warehouse process using the first intermediary warehouse progress data object instance.

13. A system comprising:
one or more computers; and
a computer-readable medium coupled to the one or more computers having instructions stored thereon which, when executed by the one or more computers, cause the one or more computers to perform operations comprising
identifying, for a warehouse, a warehouse request that includes a set of warehouse request items;
for each warehouse request item, identifying, using a data model, a warehouse process data object instance associated with a warehouse process for handling the warehouse request and a warehouse process control configuration data object instance for the warehouse process data object instance that defines both a sequence of operational steps of the warehouse process and physical movement of goods through the warehouse;
tracking, using the data model, progress of each warehouse request item using warehouse task data object instances and an intermediary warehouse progress data object instance for the warehouse request item including creating new warehouse task object instances based on the warehouse process control configuration data object instance;
determining, for each warehouse request item, that a final warehouse task has been completed for the warehouse request item; and
recording completion of the warehouse request.

14. A computer program product encoded on a non-transitory storage medium, the product comprising non-transitory, computer readable instructions for causing one or more processors to perform operations comprising:
identifying, for a warehouse, a warehouse request that includes a set of warehouse request items;
for each warehouse request item, identifying, using a data model, a warehouse process data object instance associated with a warehouse process for handling the warehouse request and a warehouse process control configuration data object instance for the warehouse process data object instance that defines both a sequence of operational steps of the warehouse process and physical movement of goods through the warehouse;
tracking, using the data model, progress of each warehouse request item using warehouse task data object instances and an intermediary warehouse progress data object instance for the warehouse request item including creating new warehouse task object instances based on the warehouse process control configuration data object instance;
determining, for each warehouse request item, that a final warehouse task has been completed for the warehouse request item; and
recording completion of the warehouse request.
